(19) Europäisches Patentamt / European Patent Office / Office européen des brevets

(11) **EP 1 902 246 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(21) Anmeldenummer: 06761730.8

(22) Anmeldetag: **29.06.2006**

(51) Int Cl.:
*F21V 7/00* *(2006.01)*   *F21V 13/04* *(2006.01)*
*G02B 17/06* *(2006.01)*   *G02B 17/08* *(2006.01)*
*F21V 7/06* *(2006.01)*

(86) Internationale Anmeldenummer:
**PCT/DE2006/001126**

(87) Internationale Veröffentlichungsnummer:
**WO 2007/006257 (18.01.2007 Gazette 2007/03)**

(54) **ERFINDUNG BETREFFEND REFLEKTORSYSTEME**

REFLECTOR SYSTEMS

SYSTEMES DE REFLECTEURS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.07.2005 DE 102005032934**

(43) Veröffentlichungstag der Anmeldung:
**26.03.2008 Patentblatt 2008/13**

(73) Patentinhaber: **PHILIPPS-UNIVERSITÄT MARBURG**
**D-35032 Marburg (DE)**

(72) Erfinder:
 • **RIES, Harald**
  **35037 Marburg (DE)**
 • **FU, Ling**
  **35037 Marburg (DE)**
 • **LEUTZ, Ral**
  **35037 Marburg (DE)**

(74) Vertreter: **Buchhold, Jürgen**
**Olbricht Buchhold Keulertz**
**Partnerschaft**
**Bettinastrasse 53-55**
**60325 Frankfurt/Main (DE)**

(56) Entgegenhaltungen:
**EP-A2- 0 286 333    US-A- 1 223 752**
**US-A- 3 805 052    US-A- 5 461 500**

 • **LEUTZ R ET AL: "CARAMBOLA OPTICS FOR RECYCLING OF LIGHT" APPLIED OPTICS, Bd. 45, Nr. 12, 20. April 2006 (2006-04-20), Seiten 2572-2575, XP001242811 ISSN: 0003-6935**

EP 1 902 246 B1

**Beschreibung**

Die vorliegende Erfindung betrifft Reflektorsysteme zur effizienten Sammlung und gerichteten Leitung und Abgabe von elektromagnetischer Strahlung, insbesondere in Form von sichtbarem Licht.

**Stand der Technik**

Im Stand der Technik sind zahlreiche Reflektorsysteme bekannt, welche konstruiert wurden, um die Lichtausbeute einer dem System zugeordneten Lichtquelle zu erhöhen.

Diese Systeme haben meist das Ziel, möglichst viel der von den zugeordneten Lichtquellen (oder elektromagnetischen Quellen) abgegebenen optischen Energie auf eine meist kleine Fläche eines Empfängers (wie etwa einer Lichtleitfaser oder auf Teile eines Projektionssystems etc.) zu konzentrieren oder zu lenken, wobei meist noch gleichzeitig das Ziel verfolgt wird den Eintrittswinkel auf der Empfängerfläche möglichst gering zu halten. Letzteres ist vor allem dann gefordert, wenn die Empfängerfläche der Faser-Querschnitt einer Lichtleitfaser ist, welche einen Grenzwinkel zur Einkopplung des Lichts aufweist. Licht. welches mit einem größeren Winkel auf diesen Querschnitt auftrifft. wird reflektiert und damit nicht effektiv in eine solche lichtleitende Struktur eingekoppelt.

Um durch ein Reflektorsystem möglichst viel der von einer zugeordneten Strahlungsquelle abgegebene optischen Energie einzusammeln und auf einer kleinen Fläche austreten zu lassen sind schon zahlreiche Systeme erdacht worden.

Dazu gehört auch die schon lange bekannte Ulbricht-Kugel. Sie weist den Nachteil auf, dass die von einer Lichtquelle im Inneren angebrachten Lichtstrahlen in mehr oder weniger ungeordneter Weise und

- nach einer hohen Zahl von Reflexionen (A_Kugel / A_Öffnung), was selbst bei dem hohen Reflexionsgrad von Spectralon zu Problemen führen kann; und
- in einem nicht konzentrierbaren, ungerichteten Winkel von +/-90 deg. aus einer als Loch ausgebildeten Fläche austritt.

Grundsätzlich ist es bekannt Reflektorelemente, in Form von zumindest teilweise ellipsoidaler, hemisphärischer, hyperbolischer oder auch toroidaler Elemente einzeln oder in Kombination miteinander zu verwenden, um Licht einer zugeordneten Strahlungsquelle zu sammeln und einer kleinen Empfängerfläche zuzuführen.

Im Falle der Ellipse nutzt man dabei deren Eigenschaft aus, dass Lichtstrahlen, ausgehend von einer in einem Brennpunkt angeordneten Lichtquelle. in dem zweiten Brennpunkt fokussiert werden, wobei z.B. in der DE 43 41 55 C2 (mit der Priorität der US 997 385) solch ein ellipsoidaler Teil mit einem im Bereich des zweiten Brennpunktes angebrachten hyperboloiden Teil kombiniert wird, um Licht im Ausgangsbereich der von der Lichtquelle abgewandten Öffnung der hyperboloiden Struktur zu sammeln.

Die EP 0 286 333 (mit der Priorität der US 34 840) zeigt eine Kombination eines ellipsoidalen Teiles mit einem hemisphärischen Teil, wobei die Strahlungsquelle vorzugsweise in der Berührungsebene der beiden Teile, in welcher auch der gemeinsame Brennpunkt liegt, angeordnet ist. Der ellipsoidale Teil ist dabei nur etwa zur Hälfte ausgeführt und auf der der Strahlungsquelle abgewandten Seite mit einem etwa senkrecht zur Hauptachse des ellipsoidalen Teiles angebrachten Reflektor abgeschlossen. Das Licht wird über eine obere Öffnung des hemisphärischen Teiles ausgekoppelt.

Die US 5 430 634 zeigt zur Konzentration die Verwendung von Reflektoren ausserhalb der optischen Achse in Form toroidaler Primär-Elemente (konkaver Reflektor mit zwei verschiedenen Krümmungsradien) und sphärischer oder ebenfalls toroidaler sekundärer Retro-Reflektor-Elemente. Bei der Verwendung auch der Retro-Reflektor-Elemente wird auch die Strahldichte der Quelle erhöht. Mit den toroidalen Elementen sollen Fehler, welche durch die "off-axis"-Geometrie in vorbekannten Systemen (wie dem in US 4 757 431 gezeigten) entstehen, insbesondere durch Astigmatismus, korrigiert werden.

Wiederum andere Reflektorsysteme, wie in US 6 227 682 und US 6 739 726 dargestellt, nutzen paraboloide oder parabolische Reflektorelemente um Licht einer zugeordneten Lichtquelle zu sammeln. Die beiden letzten genannten Systeme verwenden dazu ein erstes parabolisches Reflektorelement, in dessen Fokus die Lichtquelle angeordnet ist, um die davon ausgehenden Strahlen zu sammeln und nach Reflexion am ersten Element dann als im Wesentlichen parallel zu einem im Wesentlichen gleich geformten, zweiten parabolischen Reflektorelement zu leiten, wo die Lichtstrahlen auf dem im Fokus des zweiten Elementes befindlichen Target gebündelt werden. Optional wird gegenüberliegend dem ersten parabolischen Element ein Rück-Reflektor vorgesehen, welcher aus einer Halbkugel oder einem weiteren parabolischen Element - im Wesentlichen gleicher Bauform wie das erste und zweite Element - bestehen kann.

Sowohl in US 6 227 682, US 6 739 726 und in US 5 430 634 wird implizit vorausgesetzt bzw. explizit erwähnt, dass die jeweils vorgestellten Reflektorsysteme, insbesondere die Rück-Reflektoren, auch die Strahldichte der Quelle erhöhen, da Strahlen - mehr oder weniger zufällig - durch die Quelle hindurch oder - so diese denn eine reflektierende Oberfläche aufweist - von dieser Quelle reflektiert wird.

Die Erhöhung der Strahldichte der Quelle ist daher zu vernachlässigen.

Mit dem expliziten Ziel, die Strahldichte einer Beleuchtungseinrichtung über diejenige der Lichtquelle zu erhöhen und dabei möglichst viel der von der Lichtquelle abgestrahlten Energie zu sammeln, offenbart die US 6 144 536 im Wesentlichen eine Ulbricht-Kugel mit darin integrierter, im Wesentlichen der Form der Kugel angepasster Strahlungsquelle. Zur Lichtauskopplung weist die Einrichtung eine Öffnung in der Kugel auf, welcher ein lichtleitendes Element zur Auskopplung des Lichtes zugeordnet ist.

Der Nachteil dieser Beleuchtungsvorrichtung oder des darin eingesetzten Reflektorsystems zur Erhöhung der Strahldichte der Quelle besteht darin, dass die Erhöhung der Strahldichte der Vorrichtung über die der Quelle hinaus durch mehr oder weniger zufällige Reflexionen von Lichtstrahlen zwischen der zumindest teilweise reflektierenden Oberfläche der Lichtquelle und der Innenwand der Ulbricht-Kugel erfolgt.

Eine Vorgabe oder Kontrolle über die Anzahl der Reflexionen und damit über die Erhöhung der Strahldichte der Quelle (und damit über die Strahldichte der Beleuchtungseinrichtung) ist so nur unzureichend möglich. Dies gilt ebenso für die Erhöhung der Strahldichte der Beleuchtungseinrichtung über die intrinsische Strahldichte der Quelle (d.h. die Strahldichte der Quelle ohne jegliche Hilfsmittel). Auch ist davon auszugehen, dass - wie von der Ulbricht-Kugel bekannt - der Austritt der Strahlen aus der oben genannten Vorrichtung im Wesentlichen in einem Winkelbereich von 180° erfolgt, so dass eine Einkopplung in Lichtleitmittel oder andere Empfängerflächen, wie z.B. Lichtleitfasern mit ausgeprägtem Grenzwinkel - ohne weitere Hilfsmittel wie Kollimatoren etc. zur Bündelung der divergenten Strahlen - kaum möglich ist und auch mit Hilfsmitteln nur teilweise gelingen kann.

US 5,461,500 offenbart ein Reflektorsystem mit Paaren von parabolischen Reflektorelementen und einer Austrittsfläche, die um eine punktförmige Lichtquelle angeordnet sind. Von der Lichtquelle abgestrahltes Licht wird von den Reflektorelementen teilweise auf die Lichtquelle zurückgeworfen und teilweise durch die Austrittsfläche ausgekoppelt, so dass sich direkt von der punktförmigen Lichtquelle ausgestrahlte Strahlung und von dem Reflektor ausgestrahlte Strahlung überlagern.

**Aufgabe**

Aufgabe der vorliegenden Erfindung ist es daher ein Reflektorsystem und ein Verfahren vorzusehen, welches die Strahldichte einer zugeordneten, Strahlung emittierenden und zumindest teilweise Strahlung absorbierenden und zumindest teilweise im gleichen Wellenlängenbereich re-emittierenden und reflektierenden Strahlungsquelle, insbesondere einer Lichtquelle, erhöht und dabei eine Kontrolle über die Anzahl der Durchgänge oder/und Reflexionen und damit über die Stärke der Erhöhung der Strahldichte der Strahlungsquelle und ggf. über die Erhöhung der Strahldichte eines damit aufgebauten Beleuchtungssystems (Kombination der Strahlungsquelle mit dem erfindungsgemäßen Reflektorsystem ,ggf. mit Hilfsmitteln wie Linsen, Kollimatoren, Prismen oder weiteren Reflektoren) ermöglicht.

Dabei sollte das Reflektorsystem möglichst auch das Sammeln möglichst großer Anteile oder eines definierten Anteiles der abgestrahlten Energie in einem vorgegebenen Raumwinkelbereich ermöglichen.

**Lösung der Aufgabe**

Diese Aufgabe wird erfindungsgemäß gelöst durch ein Reflektorsystem gemäß Anspruch 1 und ein Verfahren gemäß Anspruch 12.

Den Kern der Erfindung bildet die Vorsehung von paarweise gegeneinander geneigt oder verkippt ausgeführten Reflektorelementen, welche Strahlung ausgehend von einem Oberflächenbereich der zumindest teilweise Strahlung emittierenden und absorbierenden sowie reflektierenden Strahlungsquelle in der Weise reflektieren, dass diese Strahlung zumindest teilweise und in zumindest teilweise geordneter Weise auf einen zweiten Oberflächenbereich der Strahlungsquelle zurückreflektiert wird, wobei die Reflektorelemente so ausgeführt und zueinander geneigt oder verkippt und zur Strahlungsquelle angeordnet sind, dass zumindest die von einem ersten Oberflächenbereich der Strahlungsquelle ausgehende Strahlung so auf einen zum ersten Bereich versetzten Oberflächenflächenbereich der Strahlungsquelle reflektiert und durch Emission aus diesem Bereichen verstärkt wird.

In einer generelleren Beschreibung sind die Reflektorelemente des erfindungsgemäßen Reflektorsystems dadurch gekennzeichnet, dass diese gleich groß und gleich geformt und so ausgeformt und so paarweise zueinander geneigt oder verkippt sind, dass sie Strahlung, welche von einem ersten Bereich einer gegenüberliegend zu dem mindestens einen Paar der Reflektorelemente angeordneten Strahlungsquelle ausgeht, aus diesem ersten Bereich ins Unendliche abbilden und aus dem Unendlichen auf einen zweiten, zum ersten Bereich versetzten Bereich, zurück abbilden.

Dabei können sich die beiden Bereiche auf der Oberfläche oder/und innerhalb des Strahlung emittierenden Volumens der Strahlungsquelle befinden. Bei geeigneter Anordnung der Reflektorelemente, etwa in einer im Wesentlichen - bis auf die Auskopplungsfläche und die Bereiche zur Durchführung/Versorgung der Strahlungsquelle- geschlossenen Form des aus den oben beschriebenen Elementen aufgebauten, erfindungsgemäßen Reflektorsystems, welches umfänglich angeordnete Paare der oben beschriebenen Reflektorelemente aufweist, ist die mehrfache Versetzung (oder "Rezyklierung") der von einem Bereich der Quelle ausgehenden Strahlung auf weitere dazu beabstandete Bereiche zu beobachten.

Daher ist die Anordnung der oben beschriebenen Paare von Reflektorelementen so gewählt, dass eine gerade Anzahl von diesen Paaren und eine der Größe eines Paares entsprechenden Austrittsfläche die Strahlungsquelle umfänglich umschliesst, und sich nicht je zwei Paare genau gegenüber stehen. So wird ein von einem ersten Bereich der Strahlungsquelle ausgehender Strahlungsanteil mehrfach so auf dazu beabstandet angeordnete Bereiche der Quelle abgebildet, bis er schließlich aus der Austrittsfläche ausgekoppelt wird.

Somit erfolgt eine effektive Rezyklierung der von der Quelle ausgehenden Strahlung, wobei die Strahlung, welche vom zweiten und den weiteren Oberflächenbereichen im gewöhnlichen Betrieb emittiert wird, um

a) einen in diesem Bereich- oder Oberflächenbereich der Strahlungsquelle reflektierten,
oder /und
b) einen nach Durchtritt durch einen etwa gegenüberliegenden Bereich der Strahlungsquelle und nach Durchtritt durch die Strahlungsquelle emittierten Anteil

verstärkt wird, um die Strahldichte zu erhöhen.

Überraschenderweise wurde gefunden, dass sich so - nur scheinbar im Widerspruch zum 2. Hauptsatz der Thermodynamik (äquivalent zum brightness theorem) - eine Erhöhung der Strahldichte der Strahlungsquelle und bei geeigneter Wahl der Anzahl, Neigung und Ausdehnung der Reflektorelemente und der Ausdehnung der Auskopplungsfläche zu einer gegebenen, Strahlung emittierenden und zumindest teilweise Strahlung absorbierenden und reflektierenden Strahlungsquelle auch die Strahldichte der so erzeugten Beleuchtungseinrichtung erhöhen lässt. Bei besonders geeigneter Wahl ist sogar eine Erhöhung der Strahldichte der Beleuchtungseinrichtung über die intrinsische Strahldichte der Strahlungsquelle möglich.

Generell gilt dabei natürlich weiterhin, dass Absorptivität und Emissivität einer Strahlungsquelle nach Kirchhoff gleich groß sind. Das bedeutet, dass die Absorption zu gleich großer Emission führt (unter den Voraussetzungen gleicher Temperatur und gleichen Spektrums).

Für einige Lichtquellen (Gas-Entladungslampen) gilt, dass wegen der oft geringen Absorptivität die rezyklierte Strahlung teilweise durch die Lampe hindurchtritt und so die Strahldichte erhöht wird. In einigen Spektralbereichen (denen der charakteristischen Linien) erreichen Gas-Entladungslampen eine hohe Emissivität. Ist die Emissivität maximal, ist es auch die Absorptivität. In diesem Fall führt Rezyklierung von Licht zur Erhöhung der Temperatur der Lampe, die durch eine Senkung des Betriebsstroms ausgeglichen werden kann, d.h. es kommt zu einer Senkung des Energieverbrauchs bei gleicher Strahlungsleistung. Der Fall der charakteristischen Linien ist von untergeordneter Bedeutung.

Im Falle von LEDs entspricht die Absorptivität/ Emissivität ihrer Quanteneffizienz. Ist diese gering, absorbiert die LED nur einen geringen Teil der rezyklierten Strahlung; der andere Teil wird reflektiert und trägt zur Erhöhung der Strahldichte bei. Bei Inkandeszenzlampen (‚Glühlampen') kommt es ebenfalls sowohl zu Absorption als auch zu Reflexion.

Als Teil der überraschenden Ergebnisse konnte z.B. für parabolisch geformte, gegeneinander geneigt ausgeführte Reflektorelemente gefunden werden, dass die Strahldichte einer LED durch 4 paarweise gegen einander geneigt (oder verkippt) ausgeführte und im Wesentlichen miteinander verbunden ausgeführte, gleich geformte Parabolspiegelstücke als Reflektorelemente eines erfindungsgemäßen Reflektörsystems, welches, bis auf eine umfängliche Aussparung in der Größe eines Paares von Parabolspiegelstücken, die LED im Wesentlichen umgibt, erhöht wird.

Nachfolgend werden die Erfindung und weitere durch sie erzielbare Vorteile anhand von bevorzugten Ausführungsbeispielen und Zeichnungen erläutert.

Es zeigt schematisch:

Fig. 1 a:  eine erste Ausführungsform des erfindungsgemäßen Reflektorssystems (im Folgenden "Reflektive" Variante) mit zugeordneter Strahlungsquelle in einer dreidimensionalen Darstellung,

Fig. 1b:  eine zweidimensionale Darstellung der Ausführungsform gemäß Fig. 1a im Schnitt durch die Äquatorialebene (Ebene x-y im Zentrum aus Fig. 1a) mit ausgewählten Strahlen

Fig. 2:  eine zweite Ausführungsform des erfindungsgemäßen Reflektorsystems (im Folgenden "Refraktive" Variante) mit im Zentrum angeordneter Strahlungsquelle in einer dreidimensionalen Darstellung mit ausgewählten Strahlen

Fig. 3 a, b:  eine dritte Ausführungsform des erfindungsgemäßen Reflektorsystems, welche eine LED als Strahlungsquelle aufweist und in 3a einen Schnitt durch die Äquatorialebene und in 3b eine halbe Karambole darstellt mit Strahlengang

Fig. 4:  eine refraktive Ausführungsform mit einer Hochdruckgasentladungslampe mit Strahlengang

Fig. 5:  die 3d-Darstellung des erfindungsgemäßen Reflektorsystems in einer 2d-Ausführungsform für eine lineare Strahlungsquelle (Leuchtstofflampe).

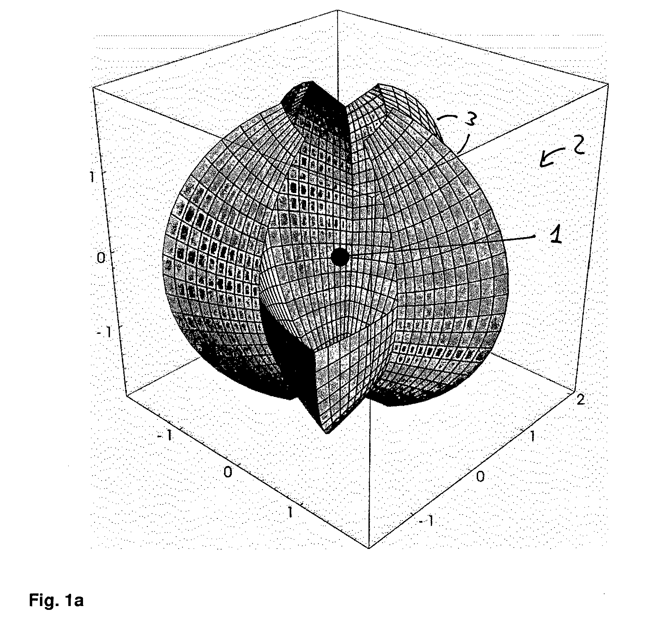

Fig. 1a zeigt eine im Folgenden als reflektierende Ausführungsform bezeichnete Form des erfindungsgemäßen Reflektorsystems (2) in einer 3-dimensionalen Darstellung. Diese Ausführungsform erinnert in ihrer Form teilweise an eine Karambole. In dieser Ausführungsform sind 4 etwa gleich große und etwa gleich geformte Parabolspiegelstücke paarweise gegeneinander geneigt ausgeführte Reflektorsegmente um die Strahlungsquelle (1) angeordnet. Die Strahlungsquelle ist dabei im Brennpunkt des Reflektorsystems und damit im Brennpunkt der Parabolspiegelstücke (3) angeordnet. Die Auskopplungsfläche aus der so gebildeten Beleuchtungsvorrichtung weist in etwa die Hälfte der Größe eines der Parabolspiegelstück-Paare auf.

Die Parabolspiegelstücke werden ausgehend von einem Schnitt durch die Äquatorial-Ebene durch das Zentrum der Karambole auf Kreisbahnen zu den Polen nach oben und unten verlängert. In einer Abwandlung dieser Ausführungsform ist zur besseren Einführbarkeit der Lichtquelle und ggf. von Versorgungs- und Halterungselementen vorgesehen, dass die Parabolstücke im oberen oder/und unteren Polbereich nicht ganz bis zu den Polen zu führen. Die in Fig. 1a dargestellt kugelförmige Quelle ist nicht maßstabsgetreu eingezeichnet (siehe zur Größe die Abschätzung weiter unten). Das Beispiel zeigt eine Reduktion des Phasenraums um den Faktor zehn (Reduktion des Raumwinkels von 4Pi (Kugel) auf 4/10 Pi (Austrittsöffnung). Diese Ausführungsform kann auch in rein 2-dimensionaler Form, vorzugsweise für eine dann etwa zylindersymmetrische Strahlungsquelle, welche etwa im Zentrum der Brennpunkte der Paare der Parabelspiegelstücke angeordnet ist, verwendet werden.

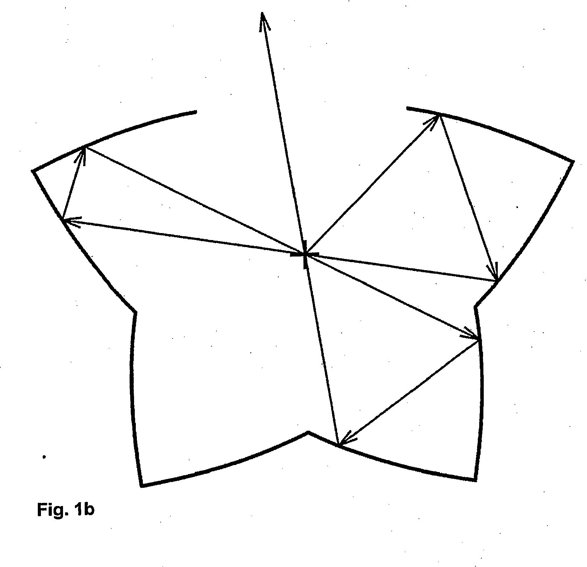

Fig. 1b zeigt einen Schnitt durch die reflektierende Ausführungsform, wie er sich für eine 3-dimensionale (nahezu kugelförmige) oder 2-dimensionale (nahezu zylindrische) Ausführungsform ergibt.

Ausgehend vom rechten oberen Paar der Parabolspiegelstücke ist zu erkennen, wie ein erster, von diesem rechten oberen Oberflächenbereich der Strahlungsquelle im Zentrum ausgehender Strahl zunächst am ersten und dann am gegenüberliegenden Parabolspiegelstück reflektiert wird, um dadurch wieder auf einen zweiten Oberflächenbereich der Strahlungsquelle zurückreflektiert zu werden. Von dort führt der Strahl durch die Strahlungsquelle hindurch (und ggf. durch eine teilweise Absorption und Re-Emission oder eine nahezu vollkommene Reflexion) zur Aussendung eines Strahls in das linke, obere Paar der Parabolstücke des erfindungsgemäßen Reflektorsystems. Dieser Strahl enthält somit eine höhere Strahldichte als ein von diesem oberen linken Bereich der Strahlungsquelle ausgehender Strahl.

Der so verstärkte Strahl höherer Dichte wird dann zwischen den paarweise gegeneinander geneigten Reflektorelementen so reflektiert, dass der Strahl durch die Strahlungsquelle hindurch in das rechte untere Paar der Reflektorsegmente des erfindungsgemäßen Systems reflektiert wird. Wiederum wird der Strahl durch Durchgang durch die Quelle und die dabei erfolgende Kombination mit einem Strahl, welcher von dem entsprechenden Oberflächenbereich emittiert wird, in seiner Strahldichte erhöht.

Der so wiederum in der Strahldichte verstärkte Strahl wird durch die paarweise, gegeneinander geneigte Anordnung der Reflektorsegmente im unteren rechten Bereich des erfindungsgemäßen Systems durch Reflexion gewissermaßen rezykliert und auf einen dritten Bereich der Strahlungsquelle reflektiert. Nach Durchtritt durch diesen Bereich und die Strahlungsquelle wird der Strahl überlagert mit einem Strahl, welcher im oberen Bereich der Strahlungsquelle emittiert wird, dadurch verstärkt und durch die im oberen Bereich des Systems vorgesehene Auskopplungsfläche ausgekoppelt.

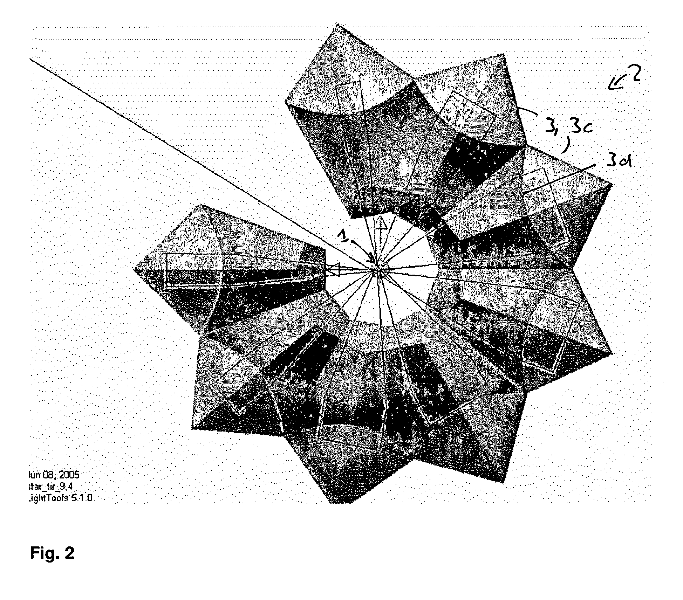

Fig. 2 zeigt eine im Folgenden als refraktive Ausführungsform bezeichnete Form des erfindungsgemäßen Reflektorsystems (2) mit einer im Mittelpunkt befindlichen, aber nicht exakt eingezeichneten Strahlungsquelle (1).

Eingezeichnet ist die Strahlverfolgung eines Strahles im Schnitt um die optische Achse, wenn die optische Achse senkrecht auf der Äquatorialebene definiert ist. Der Strahl bewegt sich schief zur Äquatorialebene und wird nach mehreren "Rezyklierungen" aus dem Reflektorsystem (2) ausgekoppelt.

In diesem Ausführungsbeispiel bilden die hinteren Begrenzungsflächen von sogenannten "Porroschen Prismen" die paarweise gegeneinander geneigten Reflektorelemente (3) zur Rezyklierung des Lichtes. Die Porroschen Prismen besitzen daneben asphärische Eintrittsoberflächen (Linsen 3d) zur Kollimation der Strahlen. Die Total-Reflexion erfolgt dann an den hinteren Begrenzungsflächen (3c). Brennpunkt der Prismen und Ort der Strahlungsquelle ist das Zentrum des Systems. Die Prismen werden auf Kreisbahnen um das Zentrum vom dargestellten Schnitt zu den Polen des Systems verlängert. An den Polen verbleiben Öffnungen etwa zum Einbringen der Lichtquelle oder zur Durchführung von Versorgungsleitungen oder Kühlelementen.

In diesem Beispiel sind 8 paarweise gegeneinander geneigte und im Wesentlichen gleiche Reflektorsegmente (hier nun in Form der vorgenannten Prismenflächen) vorgesehen. Die Auskopplungsfläche besitzt die Größe und Form eines neunten dieser Segmente. Als Abwandlung kann auch die Hälfte der Auskopplungsfläche oder des Auskopplungsbereiches durch ein weiteres halbes Porrosches Prisma, oder durch ein Paar von Parabolspiegelsegmenten, wie in Fig. 1 dargestellt, geschlossen ausgeführt sein.

In einem weiteren nicht dargestellten Ausführungsbeispiel können die Porroschen Prismen durch geeignete Linsen-Prismen- oder Linsen-Reflektoren-Kombinationen oder besonders geformte Prismen ersetzt werden, wobei geeignet erfindungsgemäß bedeutet, dass die Linsen-Prismen- oder Linsen-Reflektoren-Kombinationen oder Prismen so ausgeführt sind, dass sie die Strahlungsquelle ins Unendliche abbilden und nachfolgend unter Drehung um die Achse der Strahlungsquelle oder unter Versatz auf der Oberfläche der Strahlungsquelle wieder aus dem Unendlichen auf den gleichen Oberflächenbereich der Strahlungsquelle zurück abbilden. Dazu werden vorzugsweise Paare von Linsen-Prismen- oder Linsen-Reflektoren-Kombinationen oder Prismen vorgesehen, bei denen die beiden einzelnen Teile symmetrisch zueinander sind.

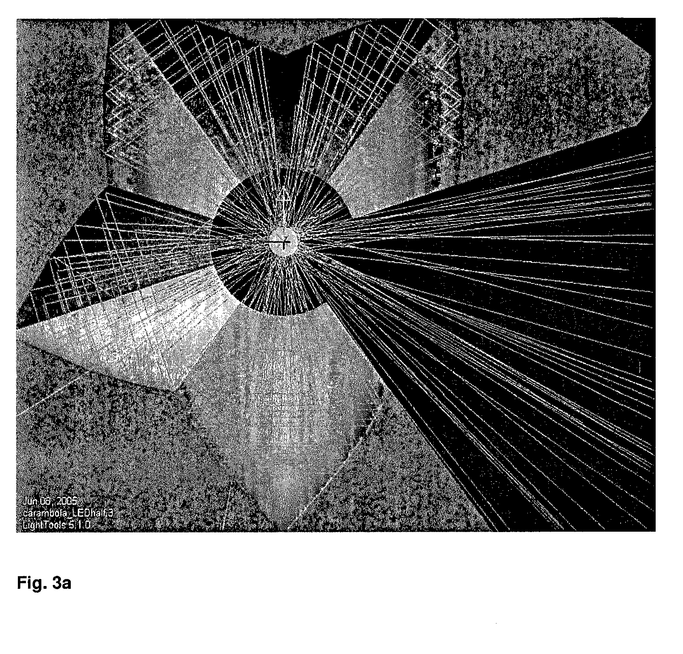

**Fig. 3a** zeigt eine Ausführungsform einer Beleuchtungseinrichtung mit dem erfindungsgemäßen Reflektorsystem (in der reflektiven Ausführung) für eine LED als Strahlungsquelle mit darin dargestellter Strahlverfolgung.

Die Quelle ist hier eine zylindrische LED mit dem Radius r = 1 mm, welche in der Äquatorialebene angeordnet ist. Die Abstrahlung erfolgt in die Bildebene hinein.

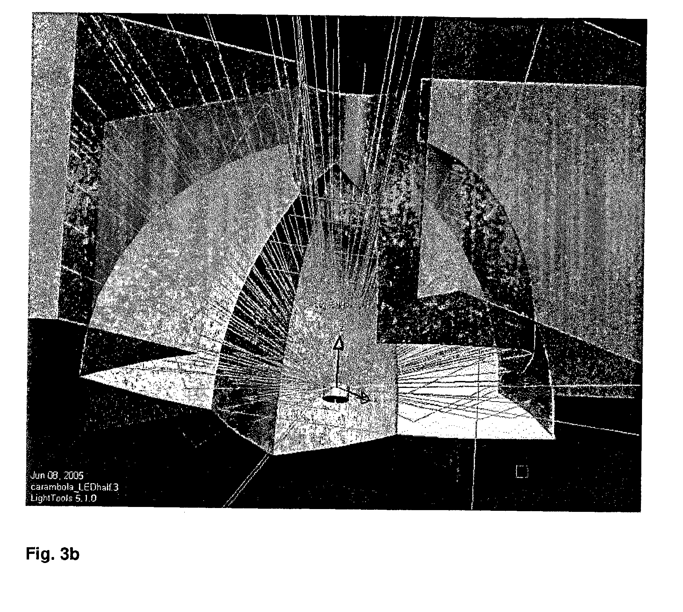

Das erfindungsgemäße Reflektorsystem umfasst in dieser Ausführungsform einen unter der Quelle angebrachten Spiegel mit R = 1 mm. Wie die Fig. 3 zeigt, wird nahezu die gesamte von der Quelle abgegebene Strahlung durch die Auskopplungsfläche ausgekoppelt. Fig. 3b zeigt ein 3d-Rendering im "Röntgenblick" einer halben Karambole für eine LED mit Blick durch die Austrittsöffnung.

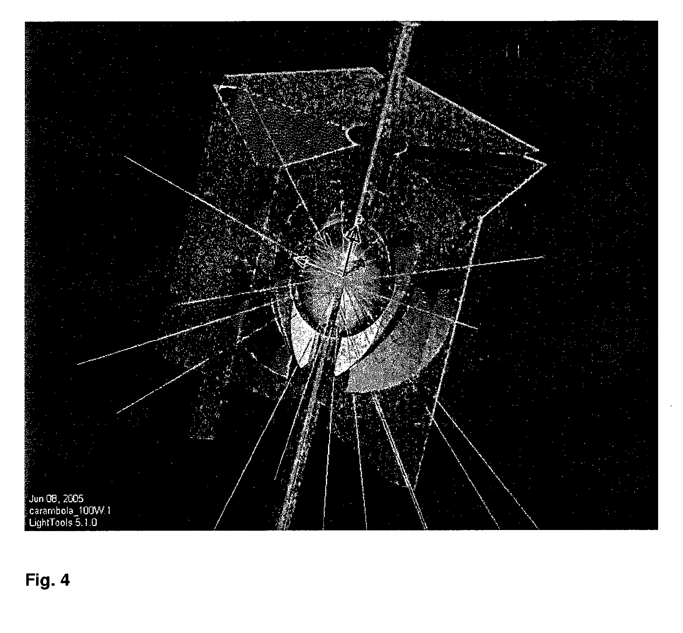

**Fig. 4** zeigt eine refraktive Ausführungsform mit einer Hochdruckgasentladungslampe.

Bei dieser Ausführungsform kommt es in Folge der Rezyklierung der Strahlung und der damit verbundenen erhöhten Absorption in Bereichen innerhalb der Ausdehnung der Quelle zur Temperaturerhöhung dieser. Zur Kompensation ist eine Kontrolle der zugeführten elektrischen Energie in Form einer Steuerung oder/und Regelung (mit dann notwendigen Temperatursensoren) vorgesehen.

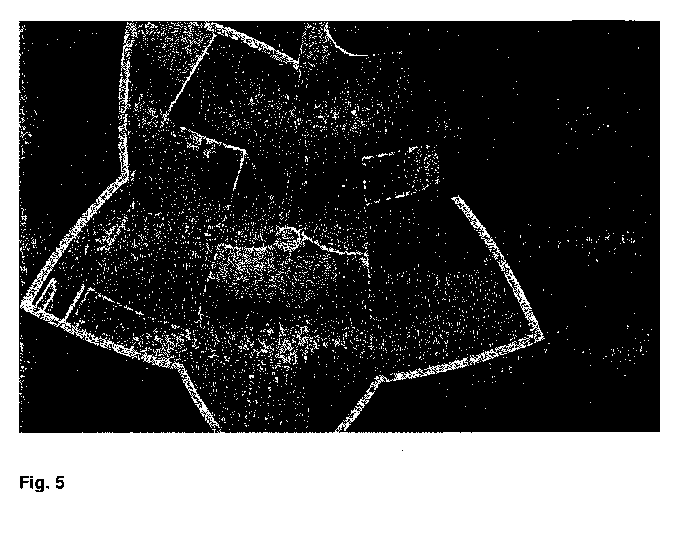

**Fig. 5** zeigt noch ein weiteres, ganz besonders vorteilhaftes Ausführungsbeispiel des erfindungsgemäßen Reflektorsystems in einer 2d-Ausführungsform für eine lineare Strahlungsquelle (Leuchtstofflampe) (3d-Darstellung).

Es ist dem Fachmann unmittelbar ersichtlich, dass die hier dargestellten Reflektorsysteme mit einer Vielzahl von Quellen für elektromagnetische Strahlung kombinierbar sind, um eine Erhöhung der Strahldichte der Quelle alleine oder auch der so erzeugten Beleuchtungseinrichtungen zu erzielen.

In weiteren Ausführungsformen kann das Reflektorsystem auch aus anderen paarweise gegeneinander geneigten Elementen bestehen, wobei diese aber so ausgeführt und zueinander und zur zugeordneten Strahlungsquelle angeordnet sein müssen, dass ein Bereich der Strahlungsquelle durch ein erstes der paarweise gegeneinander angeordneten Reflektorelemente des Systems ins Unendliche abgebildet wird und durch das zweite Reflektorelement des Paares aus dem Unendlichen wieder so auf die Strahlungsquelle abgebildet wird (durch Reflexion, Brechung oder Beugung oder andere optische Prozesse), dass ein anderer Bereich der Strahlungsquelle der so gewissermaßen zumindest teilweise rezyklierten Strahlung ausgesetzt wird.

In den bevorzugten oben dargestellten Ausführungsformen erfolgt dies durch eine gerade Anzahl von Paaren von gegeneinander geneigt ausgeführten Reflektorelementen, wobei unter Reflektor im Sinne dieser Anmeldung auch ein optisch aktives Element verstanden wird, welches auch kombinierte optische Prozesse durchführt, sofern dadurch von der Strahlungsquelle ausgehende Strahlung wieder auf die Quelle zurück abgebildet ("reflektiert") wird.

Die in der refraktiven Ausführungsform beschriebenen Porroschen Prismen können daher in anderen Ausführungsformen auch ohne asphärische Eintrittsoberflächen zur Kollimation ausgeführt werden und als Teil des erfindungsgemäßen Reflektorsystems kombiniert werden, um die vor der Totalreflexion notwendige Kollimation durchzuführen.

In einer weiteren Ausführungsform - nicht dargestellt -, welche eine geringe Erhöhung des kontrolliert einstellbaren Anteils der Strahlungsdichte vorsieht, ist vorgesehen, lediglich zwei oder drei Paare von gegeneinander geneigten erfindungsgemäßen Reflektorelementen um ein Zentrum zur Positionierung der Strahlungsquelle anzuordnen.

Im Falle von zwei Paaren, welche nicht direkt mit einander verbunden sind, sind diese vorzugsweise nicht auf einer gemeinsamen optischen Achse, also nicht etwa ungefähr gegenüber zueinander angeordnet, da sonst keine wesentliche Rotation der von der Strahlungsquelle ausgehenden Strahlung und damit keine Rezyklierung zustande kommt.

Die Bereiche zwischen den Paaren von gegeneinander geneigt ausgeführten Reflektorelementen können dann durch optisch inaktive oder vorzugsweise durch optisch aktive Flächen zur Erhöhung der Lichtausbeute geschlossen werden unter Ausnahme einer Auskopplungsfläche. Die so erzeugte Beleuchtungseinrichtung weist im Vergleich zur Ulbricht-Kugel immer noch eine kontrolliertere Erhöhung der Strahldichte auf.

In einer weiteren Ausführungsform - nicht dargestellt - ist vorgesehen, die Reflektorelemente zumindest teilweise mit mehrschichtigen Beschichtungen zur gezielten Auskopplung von Wärmestrahlung, wie es aus dem Stand der Technik etwa aus der EP 0 286 333 A2 auf Seite 6 im obersten Absatz bekannt ist, oder mit dichroitischen Spiegeln zu versehen.

Generell sei hier nochmals die generelle Wirkungsweise des erfindungsgemäßen - auch als Karambole bezeichneten - Reflektorsystems beschrieben:

Erhöhung der Lichtausbeute

Karambole erhöht den nutzbaren Strahlungsfluss (radiant power, W) durch Umlenkung der von der Lichtquelle in nicht nutzbare Raumrichtungen emittierten Strahlung in eine durch die Geometrie definierte und gewünschte Richtung. Die Zahl der paarweisen Reflektorelemente des Systems (Parabolsegmentepaar oder Porrosche Prismen mit asphärischer Eintrittsfläche, oder Linsen-Prismen- oder Linsen-Reflektorkombinationen oder Prismen oder der paarweisen anderen Reflektorelemente ist vorzugsweise gerade; zusätzlich ist ein freibleibendes Segment gleicher Größe und gleichen Winkelabschnitts nötig, wenn ansonsten keine Auskopplungsfläche in der Ausführungsform der umfänglich um die Strahlungsquelle geschlossenen Form des Reflektorsystems vorgesehen ist. In den rotationssymmetrischen Fällen kann das freibleibende Segment teilweise, z.B. etwa zur Hälfte, durch ein optisch aktives Segment ersetzt werden.

Erhöhung der Strahldichte

Karambole kann die Strahldichte (radiance, W/(m²sr) der Lichtquelle durch Rezyklierung von emittiertem Licht durch die Quelle erhöhen. Die Erhöhung der Strahldichte hängt von der Absorptivitäts- und Emissivitätscharakteristik der Lichtquelle ab. Für Quellen mit geringer Absorptivität/Emissivität lässt sich die Strahldichte deutlich erhöhen. Dies zeigt sich im Experiment beispielsweise für Entladungslampen, siehe Literaturstelle [1]. Dort ist auch erklärt, warum sich eine Erhöhung der Strahldichte nicht im Widerspruch mit dem 2. Hauptsatz der Thermodynamik (brightness theorem) befindet:

The brightness theorem states that it is impossible to increase the spectral radiance of light by means of passive optical devices. This theorem seems to be intuitive because spectral radiance is connected to temperature; increasing it seems to violate the Second Law. However, consider a gray thermal source, i. e. a source that emits thermal radiation at an emissivity smaller than unity. Kirchhoffs Law states that absorptivity is equal to emissivity. Thus if we redirect part of the emitted radiation back onto the source, some of it would not be absorbed but instead would either be transmitted or reflected. Consequently, this radiation would be superposed to the thermal radiation from the source in the same phase space and thereby the spectral radiance would be increased. In fact, thermal sources such as high pressure discharge lamps feature absorptivity-emissivity values far below unity.

The authors in [1] show that for such sources the spectral brightness can be increased. This does not contradict the Second Law because light recycling reduces the irreversibie entropy production inherent to the radiation process. In effect light recycling is equivalent to increasing the optical thickness of the source (and with it the effective emissivity) for the price of reducing the total phase space of emitted radiation by the same factor.

[1]: Ling Fu, R Leutz, H Ries: Spectroscopic measurements of radiation of highpressure mercury discharge lamps; Journal of Applied Physics, 2005

Abschätzung der effektiven optischen Dicke der Quelle

Die optische Dicke der Quelle $2r_Q^{optisch}$ lässt sich in erster Näherung - im Falle der bis auf die Auskopplungsflächen und ggf. Flächen für die Einführung und Viersorgung sowie Halterung der Strahlungsquelle im Wesentlichen vollkommenen zwei-dimensionalen oder drei-dimensionalen Umschließung einer Strahlungsquelle - aus der Zahl der Reflexionen m herleiten. Die Zahl der Reflexionen teilt den Raum, in den die Quelle abstrahlt, in eine entsprechende Zahl von Raumwinkeln, die überlagert werden. Damit ist die resultierende optische Dicke der Quelle

$$r_Q^{optisch} \approx m\, r_Q^{original}$$

Das entspricht dem Verhältnis des gesamten Raumwinkels der Quelle zu dem Raumwinkel der Öffnung für die Austrittsfläche.

Abschätzung des Größenverhältnisses von Lichtquelle und Karambole (im Falle der Ausführungsform der im Wesentlichen Umschließung einer Strahlungsquelle): Das Größenverhältnis von Lichtquelle und Karambole, also der minimale Abstand zwischen der ausgedehnten Lichtquelle mit Radius rQ und dem Radius des Innenraums der Karambole rC, lässt sich analog zu der oben genannten Abschätzung bestimmen. Es gilt in erster Näherung, dass die Vergrößerung der optischen Dicke der Quelle um die Zahl der Reflexionen m proportional sein muss zur Verlängerung des Radius des Innenraums der Karambole rC

$$r_C \geq m\, r_Q^{original}$$

Es ist dem Fachmann ebenso unmittelbar ersichtlich, dass an der Stelle der einen Lichtquelle auch mehrere Lichtquellen, im Falle der gleichartigen Ausführung und Anordnung mehrerer Paare von Reflektorelementen, vorzugsweise im Wesentlichen im gemeinsamen Brennpunkt oder in der gemeinsamen Brennlinie der Paare angeordnet sein können.

Ebenso ist dem Fachmann ersichtlich, dass das der Erfindung zugrundeliegende Verfahren auch zeitlich nacheinander auf einen von einem Bereich einer Strahlungsquelle - etwa periodisch ausgehenden Strahlungsteil - angewendet werden kann, um diesen Teil auf einen dazu versetzten Bereich abzubilden, welcher bevorzugt zeitlich mit dieser Abbildung abgestimmt ebenfalls emittiert, um so eine Erhöhung der Strahldichte dieses zweiten Bereiches zu erzielen. Die dazu notwendigen Reflektorelemente des dazugehörigen erfindungsgemäßen Reflektorsystems sind dazu geeignet auszuformen und zueinander anzuordnen (etwa geneigt oder verkippt), können aber auch entsprechend des Strahlpfades zeitlich nacheinander in der oben genannten Form zueinander ausgerichtet werden, um die Rezyklierung des Strahlanteils vom ersten Bereich der Quelle auf den zweiten, dazu versetzten Bereich der Quelle abzubilden.

Der gleiche Effekt kann natürlich auch - insbesondere bei diskontinuierlich emittierenden Quellen - durch Rotation der Quelle - relativ zum erfindungsgemäßen Reflektorsystem - erzielt werden..

**[Bezugszeichenliste]**

1    Strahlungsquelle
2    Reflektorsystem
3    Reflektorelement oder -segment
3c   Prismenendfläche
3d   Linse

**Patentansprüche**

1.  Reflektorsystem (2) zur effizienten Sammlung und gerichteten Leitung und Abgabe von elektromagnetischer Strahlung, aufweisend eine gerade Anzahl von Paaren von Reflektorelementen (3), die umfänglich um eine Strahlungsquelle (1) angeordnet und so ausgeformt und so paarweise zueinander geneigt oder zueinander verkippt ausgeführt sind, dass sie Strahlung, welche von einem ersten Bereich der Strahlungsquelle (1) ausgeht, aus dem ersten Bereich ins Unendliche abbilden und aus dem Unendlichen auf einen zweiten, zum ersten versetzten Bereich der Strahlungsquelle (1) abbilden , wobei das System (2) **dadurch gekennzeichnet ist, dass** die Paare von Reflektorelementen (3)

    • gleich groß und gleich geformt sind, und
    • so zueinander und gegenüber der Strahlungsquelle (1) angeordnet sind, dass sich nicht je zwei Paare genau gegenüber stehen, und
    • zusammen mit einer Austrittsfläche die Strahlungsquelle (1) umfänglich umschließen, wobei die Austrittsfläche eine umfängliche Aussparung darstellt, deren Größe der eines Paares entspricht.

2.  System (2) nach Anspruch 1, **dadurch gekennzeichnet, dass** die Reflektorelemente (3) als parabolisch geformte Reflektorelemente ausgeführt sind.

3.  System (2) nach Anspruch 1, **dadurch gekennzeichnet, dass** die Reflektorelemente in Form von Porroschen Prismen mit einer asphärischen Eintrittsoberfläche (3d) zur Kollimation der Strahlung und gegeneinander geneigt ausgeführten Endflächen (3c) zur Totalreflexion der eintretenden Strahlung an jeder Fläche ausgeführt sind.

4.  System (2) nach Anspruch 1, **dadurch gekennzeichnet, dass** die Reflektorelemente Linsen-Prismen- oder Linsen-Reflektoren-Kombinationen oder besonders geformte Prismen oder Kombinationen davon, welche Strahlung aus einem ersten Bereich einer zugeordneten Strahlungsquelle (1) ins Unendliche abbilden und aus dem Unendlichen auf einen zweiten, zum ersten beabstandeten Bereich der Strahlungsquelle (1) zurück abbilden, als Teile der Reflektorelemente (3) aufweisen.

5.  System (2) nach Anspruch 1 bis 3, **dadurch gekennzeichnet, dass** die Reflektorelemente (3) zumindest auf einer Strahlung umlenkenden oder reflektierenden Teilfläche (3c) mit einer oder mehreren Schichten zur Auskopplung von Wärmestrahlung, beschichtet oder/und aktiv, z.B. durch Kühlfluide oder -medien, oder/und passiv gekühlt, etwa durch Kühlrippen oder andere Verfahren unter Nutzung natürlicher Konvektion, ausgeführt sind.

6.  System (2) nach Anspruch 1 bis 5, **dadurch gekennzeichnet, dass** das Reflektorsystem (2) im Wesentlichen in Form einer unteren und/oder oberen Halbkugel einer Karambole, als komplette Karambole oder in Form von Teilen davon und mit Ausnehmungen für die Einsetzung der Strahlungsquelle (1) oder/und für Versorgungsleitungen für die Strahlungsquelle (1) ausgeführt ist.

7.  Beleuchtungsvorrichtung, umfassend eine oder mehrere Strahlungsquellen (1), sowie eine Austrittsfläche zur Auskopplung der Strahlung, **dadurch gekennzeichnet, dass** die Vorrichtung eines der Reflektorsysteme (2) gemäß Anspruch 1 bis 6 aufweist.

8.  Beleuchtungsvorrichtung nach Anspruch 7, **dadurch gekennzeichnet, dass** die Vorrichtung als Strahlungsquelle (1) eine oder mehrere oder Kombinationen von kontinuierlich oder periodisch abstrahlenden Quellen umfassend LED, OLED, Laser, Halbleiterlaser, Gasentladungslampe oder Glühlampe, oder eine oder mehrere oder Kombinationen von Quellen, welche in den bekannten Bereichen elektromagnetischer Strahlung abstrahlen, wie Magnetron-, Röntgen-, UV-, IR-, sichtbarer oder Mikrowellenstrahlung, aufweist.

9.  Beleuchtungsvorrichtung nach Anspruch 7 bis 8, **dadurch gekennzeichnet, dass** die Vorrichtung eine im Wesentlichen zylindersymmetrische, kugelförmige oder viereckige Strahlungsquelle (1) oder eine Anordnung von derartig geformten Strahlungsquellen (1) umfasst.

10. Verwendung eines der Reflektorsysteme (2) nach Anspruch 1 bis 6 zur effizienteren Sammlung oder/und zur geordneteren Bündelung der von mindestens einer zugeordneten Strahlungsquelle (1) abgegebenen Strahlung oder/und zur Steigerung der Strahl-/ oder/und Energiedichte mindestens einer zugeordneten Strahlungsquelle (1) oder zur Steigerung der Strahl-/ oder/und Energiedichte des gesamten Reflektorsystems (2).

11. Verwendung eines der Reflektorsysteme (2) nach Anspruch 1 bis 6 oder/und einer der Beleuchtungsvorrichtungen nach Anspruch 7 bis 9 in Beleuchtungssystemen oder in Systemen zur Hinter- oder/und Vordergrund-Beleuchtung von Displays nach dem Reflexions- oder Transmissions-Typ.

12. Verfahren zur Erhöhung der Lichtausbeute oder/und Energiedichte elektromagnetischer Strahlungsquellen (1) eines Reflektorsystems (2) oder einer ein Reflektorsystem umfassenden Beleuchtungsvorrichtung oder/und zur kontrollierten Umlenkung der Strahlung elektromagnetischer Strahlungsquellen (1) in einem Reflektorsystem, **gekennzeichnet durch** folgende Verfahrensschritte:

> 1) Bereitstellung einer elektromagnetische Strahlung abgebenden Quelle (1)
> 2) Zumindest temporäre umfängliche Anordnung um die Quelle (1) von einer geraden Anzahl von Paaren zumindest temporär gegeneinander geneigten oder verkippten Reflektorelementen (3) in der Form, dass zumindest jedes Paar von Reflektorelementen (3) von einem Bereich der Quelle (1) ausgehende Strahlung zunächst ins Unendliche abbildet und dann aus dem Unendlichen wieder auf einen zweiten, zum ersten Bereich versetzten Bereich der Quelle (1) abbildet, wobei die Paare von Reflektorelementen (3)
>
> > • gleich groß und gleich geformt sind, und
> > • so zueinander und gegenüber einer Strahlungsquelle (1) angeordnet sind, dass sich nicht je zwei Paare genau gegenüber stehen, und
> > • zusammen mit einer Austrittsfläche, die Strahlungsquelle (1) umfänglich umschließen, wobei umfängliche Ausdehnung der Austrittsfläche der eines Paares entspricht.

13. Verfahren nach Anspruch 12, **dadurch gekennzeichnet, dass** die Versetzung in Schritt 2) gemäß der erwünschten Erhöhung der Energiedichte mehrfach wiederholt ausgeführt wird, vorzugsweise so, dass eine gerade Anzahl von Versetzungen erfolgt, wobei die so mehrfach umgelenkte und in der Dichte erhöhte Strahlung besonders bevorzugt nach der letzten Versetzung aus dem dazu mit einer Auskopplungsfläche versehenen Reflektorsystem (2) oder aus der entsprechenden Beleuchtungsvorrichtung ausgekoppelt wird.

**Claims**

1. Reflector system (2) for efficient collection and directed guidance and emission of electromagnetic radiation, comprising an even number of pairs of reflector elements (3) which are arranged peripherally around a radiation source (1) and are shaped and designed as to be inclined towards one another or tilted towards one another in pairs in such a way that they image radiation which emanates from a first region of the radiation source (1) from the first region into infinity and from infinity onto a second region, offset from the first region, of the radiation source (1), the system (2) being **characterised in that** the pairs of reflector elements (3)

   • are of the same size and shape, and
   • are arranged relative to one another and to the radiation source (1) in such a way that not two pairs each with are exactly opposite to one another, and
   • together with an exit face, peripherally surround the radiation source (1), the exit face being a peripheral recess, the size of which corresponds to that of a pair.

2. System (2) according to claim 1, **characterised in that** the reflector elements (3) are designed as parabolic-shaped reflector elements.

3. System (2) according to claim 1, **characterised in that** the reflector elements are designed in the form of Porro prisms comprising an aspherical entry surface (3d), for collimating the radiation and end faces (3c) which are inclined towards one another for total reflection of the incoming radiation at each face.

4. System (2) according to claim 1, **characterised in that** the reflector elements comprise lens/prisms or lens/reflector combinations or specifically shaped prisms or combinations thereof which image radiation from a first region of an assigned radiation source (1) into infinity and back from infinity onto a second region, spaced apart from the first region, of the radiation source (1), as parts of the reflector elements (3).

5. System (2) according to claims 1 to 3, **characterised in that** the reflector elements (3) are designed, at least on a partial face (3c) which deflects or reflects radiation and comprises one or more layers for coupling out heat radiation, so as to be coated and/or cooled actively, for example by cooling fluids or cooling media, and/or passively, for example by cooling ribs or other methods using natural convection.

6. System (2) according to claims 1 to 5, **characterised in that** the reflector system (2) is designed substantially in the form of a lower and/or upper hemisphere of a carambola, as a complete carambola or in the form of parts thereof and comprises recesses for the insertion of the radiation source (1) and/or for supply lines for the radiation source (1).

7. Lighting device, comprising one or more radiation sources (1) and an exit face for coupling out the radiation, **characterised in that** the device comprises any of the reflector systems (2) according to claims 1 to 6.

8. Lighting device according to claim 7, **characterised in that** the device comprises, as a radiation source (1), one or more or combinations of continuously or periodically radiating sources including LEDs, OLEDs, lasers, semiconductor lasers, gas discharge lamps or incandescent lamps, or one or more or combinations of sources which radiate electromagnetic radiation in the known ranges, such as magnetron, X-ray, UV, IR, visible or microwave radiation.

9. Lighting device according to claims 7 to 8, **characterised in that** the device comprises a substantially cylindrically symmetric, spherical or quadrangular radiation source (1) or an arrangement of radiation sources (1) of these shapes.

10. Use of any of the reflector systems (2) according to claims 1 to 6 for more efficient collection and/or for more controlled collimating of the radiation emitted by at least one assigned radiation source (1) and/or for increasing the radiance and/or energy density of at least one assigned radiation source (1) or for increasing the radiance and/or energy density of the entire reflector system (2).

11. Use of any of the reflector systems (2) according to claims 1 to 6 and/or any of the lighting devices according to claims 7 to 9 in lighting systems or in systems for back- and/or front lighting of reflection- or transmission-type displays.

12. Method for increasing the light efficiency and/or energy density of electromagnetic radiation sources (1) of a reflector system (2) or of a lighting device comprising a reflector system and/or for controlled deflection of the radiation of electromagnetic radiation sources (1) in a reflector system, **characterised by** the following method steps:

1) providing a source (1) which emits electromagnetic radiation,
2) arranging peripherally around the source (1), at least temporarily, an even number of pairs of reflector elements (3) which are inclined or tilted towards one another, at least temporarily, such that at least each pair of reflector elements (3) initially images radiation emanating from a region of the source (1) into infinity and then from infinity back onto a second region, offset from the first region, of the source (1), the pairs of reflector elements (3)

• being of the same size and shape, and
• being arranged relative to one another and to a radiation source (1) in such a way that not two pairs each with are exactly opposite to one another, and
• together with an exit face, peripherally surrounding the radiation source (1), a peripheral dimension of the exit face corresponding to that of a pair.

13. Method according to claim 12, **characterised in that** the offset in step 2) is repeated multiple times according to the desired increase in the energy density, preferably such that an even number of offsets occurs, the radiation which is thus deflected multiple times and the density of which is increased particularly preferably being coupled out of the reflector system (2), which is provided with an outcoupling face for this purpose, or out of the corresponding lighting device after the last offset.

**Revendications**

1. Système de réflecteurs (2) pour un regroupement efficace et une transmission et une délivrance dirigées d'un rayonnement électromagnétique, présentant un nombre pair de paires d'éléments réflecteurs (3), qui sont aménagés en périphérie autour d'une source de rayonnement (1) et sont conformés et disposés de manière à pouvoir s'incliner l'un vis-à-vis de l'autre par paire ou à basculer l'un vis-à-vis de l'autre de sorte qu'ils forment un rayonnement, qui sort d'une première zone de la source de rayonnement (1), de la première zone à l'infini et de l'infini à une seconde zone de la source de rayonnement (1) décalée de la première, dans lequel le système (2) est **caractérisé en ce que** les paires d'éléments réflecteurs (3)

• sont de même grandeur et de même forme, et
• sont aménagées l'une vis-à-vis de l'autre et vis-à-vis de la source de rayonnement (1) de manière que, respectivement, deux paires ne se trouvent pas exactement en regard l'une de l'autre, et
• enserrent sur la périphérie, conjointement avec une surface de sortie, la source de rayonnement (1), la surface de sortie représentant une cavité périphérique dont la grandeur correspond à celle d'une paire.

**2.** Système (2) selon la revendication 1, **caractérisé en ce que** les éléments réflecteurs (3) se présentent sous la forme d'éléments réflecteurs de forme parabolique.

**3.** Système (2) selon la revendication 1, **caractérisé en ce que** les éléments réflecteurs se présentent sous la forme de prismes de Porro avec une surface d'entrée asphérique (3d) pour collimater le rayonnement et des surfaces d'extrémité (3c) inclinées l'une par rapport à l'autre pour la réflexion totale du rayonnement entrant sur chaque face.

**4.** Système (2) selon la revendication 1 **caractérisé en ce que** les éléments réflecteurs présentent des combinaisons lentilles-prismes ou lentilles-réflecteurs ou des prismes de forme particulière ou encore des combinaisons de ceux-ci, qui forment un rayonnement à partir d'une première zone d'une source de rayonnement affectée (1) à l'infini et de l'infini sur une seconde zone de la source de rayonnement (1) distante de la première, en tant que parties des éléments réflecteurs (3).

**5.** Système (2) selon les revendications 1 à 3, **caractérisé en ce que** les éléments réflecteurs (3) se présentent au moins sur une face partielle (3c) faisant tourner ou réfléchissant un rayonnement, revêtus d'une ou plusieurs couches pour déclencher un rayonnement thermique, et/ou refroidis activement, par exemple, par des fluides ou des agents de refroidissement, et/ou de manière passive, éventuellement par l'usage de nervures de refroidissement ou d'une autre procédure tirant profit de la convexion naturelle.

**6.** Système (2) selon les revendications 1 à 5, **caractérisé en ce que** le système de réflecteurs (2) se présente sensiblement sous la forme d'une demi-sphère supérieure et/ou inférieure d'une carambole, d'une carambole complète ou sous la forme de parties de celle-ci et avec des cavités pour insérer la source de rayonnement (1) et/ou pour des conduites d'alimentation pour la source de rayonnement (1).

**7.** Dispositif d'éclairage comprenant une ou plusieurs sources de rayonnement (1) ainsi qu'une face de sortie pour déclencher le rayonnement, **caractérisé en ce que** le dispositif présente un des systèmes réflecteurs (2) selon les revendications 1 à 6.

**8.** Dispositif d'éclairage selon la revendication 7, **caractérisé en ce que** le dispositif présente comme source de rayonnement (1) une ou plusieurs sources ou des combinaisons de sources rayonnant de manière continue ou périodique comprenant des DEL, des DELO, des lasers, des lasers à semi-conducteur, des lampes à décharge dans un gaz, des lampes à incandescence, ou une ou plusieurs ou des combinaisons de sources, qui rayonnent dans les zones connues un rayonnement électromagnétique, notamment un rayonnement de magnétron, des rayons X, des rayons UV, des rayons IR, un rayonnement visible ou un rayonnement à microondes.

**9.** Dispositif d'éclairage selon les revendications 7 et 8, **caractérisé en ce que** le dispositif comprend une source de rayonnement (1) sensiblement en forme de cylindre symétrique, sphérique ou carré ou bien un aménagement de sources de rayonnement (1) formé de cette manière.

**10.** Utilisation d'un des systèmes réflecteurs (2) selon les revendications 1 à 6, pour un regroupement efficace et/ou pour la formation d'un faisceau ordonné du rayonnement délivré par au moins une source de rayonnement affectée (1) et/ou pour augmenter la densité du rayonnement et/ou la densité énergétique d'au moins une source de rayonnement affectée (1) ou pour augmenter la densité de rayonnement et/ou la densité énergétique du système total de réflecteurs (2).

**11.** Utilisation d'un des systèmes réflecteurs (2) selon les revendications 1 à 6 et/ou d'un des dispositifs d'éclairage selon les revendications 7 à 9 dans des systèmes d'éclairage ou dans des systèmes pour l'éclairage avant et/ou arrière d'affichages selon le type de réflexion ou de transmission.

**12.** Procédé permettant d'augmenter le rendement lumineux et/ou la densité énergétique de sources de rayonnement électromagnétiques (1) d'un système de réflecteurs (2) ou d'un dispositif d'éclairage comprenant un système de réflecteurs et/ou pour programmer de manière contrôlée le rayonnement de sources de rayonnement électromagnétiques (1) dans un système de réflecteurs, **caractérisé par** les étapes de procédé suivantes:

1) préparation d'une source (1) délivrant un rayonnement électromagnétique,
2) aménagement périphérique au moins temporaire autour de la source (1) d'un nombre pair de paires d'éléments réflecteurs (3) inclinés ou basculés l'un vis-à-vis de l'autre au moins temporairement sous une forme telle qu'au moins chaque paire d'éléments réflecteurs (3) forme tout d'abord un rayonnement délivré par une zone de la source (1) à l'infini et forme ensuite à l'infini à nouveau une seconde zone de la source (1) décalée de la première zone, si bien que les paires d'éléments réflecteurs (3)

• sont de même grandeur et de même forme, et

• sont aménagées l'une vis-à-vis de l'autre et vis-à-vis de la source de courant (1) de manière que, respectivement, deux paires ne se trouvent pas exactement en regard l'une de l'autre, et
• enserrent sur la périphérie, conjointement avec une surface de sortie, la source de rayonnement (1), la surface de sortie représentant une cavité périphérique dont la grandeur correspond à celle d'une paire.

13. Procédé selon la revendication 12, **caractérisé en ce que** le décalage de l'étape (2) est répété à plusieurs reprises selon l'augmentation souhaitée de la densité énergétique, de préférence de sorte qu'un nombre pair de décalages se fasse, moyennant quoi le rayonnement si fréquemment programmé et de densité plus élevée sera déclenché en particulier de préférence après le dernier décalage dans le système de réflecteurs (2) pourvu à cet effet d'une face de déclenchement ou du dispositif d'éclairage correspondant.

**Fig. 1a**

Fig. 1b

Fig. 2

Fig. 3a

Jun 08, 2005
carambola_LEDhalf.3
LightTools 5.1.0

**Fig. 3b**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 434155 C2
- US 997385 A
- EP 0286333 A
- US 34840 A
- US 5430634 A
- US 4757431 A
- US 6227682 B
- US 6739726 B
- US 6144536 A
- US 5461500 A
- EP 0286333 A2

**In der Beschreibung aufgeführte Nicht-Patentliteratur**

- **LING FU ; R LEUTZ ; H RIES.** Spectroscopic measurements of radiation of highpressure mercury discharge lamps. *Journal of Applied Physics,* 2005